# EUROPÄISCHE PATENTSCHRIFT

(11) **EP 0 414 208 B1**
(45) Veröffentlichungstag und Bekanntmachung des Hinweises auf die Patenterteilung: **15.12.1993**
(21) Anmeldenummer: 90116004.4
(22) Anmeldetag: 21.08.1990
(51) Int. Cl.: B62D 55/24, B62D 55/26, B62D 55/27

(54) **Stahlsteg für Gleisketten**
Steel lug for tracks
Barrette en acier pour chenilles

(30) Priorität: 21.08.1989 DE 8910021 U
(43) Veröffentlichungstag der Anmeldung: 27.02.1991
(73) Patentinhaber: Karl Kässbohrer Fahrzeugwerke GmbH, D-89077 Ulm (DE)
(72) Erfinder: Haug, Walter, Dipl.-Ing., D-7906 Blaustein (DE)
(74) Vertreter: Grünecker, Kinkeldey, Stockmair & Schwanhäusser Anwaltssozietät

(56) Entgegenhaltungen:
- AT-B- 327 705
- DE-A- 2 714 531
- FR-A- 2 094 636

## Beschreibung

Die Erfindung betrifft eine Laufkette für Raupenfahrzeuge, insbesondere solche für die Pflege von Skipisten, mit mehreren parallel zueinanderliegenden und in Fahrtrichtung ausgerichteten Bänder aufweisen, an denen quer eine Vielzahl von Stahlstegen befestigt sind, die im Querschnitt einen U-Bügel mit zwei U-Schenkeln und dazwischen einen Verbindungssteg aufweisen, von denen der erste U-Schenkel als Verlängerung einen über einen Knick nach innen geführten Verbindungsschenkel, sowie nach einem weiteren Knick ein sih daran anschließendes, in etwa zu den U-Schenkeln paralleles Schwert besitzt.

Ein Stahlsteg der eben genannten ist aus der Praxis bekannt. Er wird primär bei hartem Grund z.B. vereisten Pisten eingesetzt. Er ist als offenes Profil ausgebildet und weist einen asymmetrischen Querschnitt auf. Da der Schubmittelpunkt bei diesem offenen Profil außerhalb der Geometrie liegt, treten hohe Torsionsspannungen auf. Gleichfalls sind auch hohe Biegespannungen gegeben.

Der bekannte Stahlsteg besteht aus hochwertigem Vergütungsstahl, der erhebliche Fertigungsprobleme bedingt. Richt- und Prägevorgänge sind notwendig, er muß auch einer Wärmebehandlung unterzogen werden. Hierdurch besteht die Gefahr des Verzuges. Die Stahlstege müssen oft nachgerichtet werden, wodurch Haar-Riße entstehen können.

Wegen der Asymmetrie des Profiles ist es notwendig, gesondert für die linke und rechte Laufkette eigene Stege zu fertigen, wodurch sich die Herstellungskosten erhöhen.

Probleme gibt es auch mit der Befestigung der Kettenstege an den Führungsbügeln für den trieb und mit den Bändern.

Insbesondere beim Fahrbetrieb auf der Piste werden die Bänder an der Verbindungsstelle mit den Stegen angegriffen und teilweise zerstört. Die auf den Stegen üblichen Führungsplatten und Spikehalter sind auf den vorbekannten Stegen ungünstig angeordnet und können nicht optimal befestigt werden.

Aus der Praxis sind auch gattungsfremde Leichtmetallstege für Laufketten bekannt, die bereits über ein symmetrisches Profil verfügen. Sie sind zumeist als Strangpressprofil gefertigt und verfügen über einen relativ verdickten Fußteil, der sich zum Schwert hin verjüngt. Um die Leichtmetallstege ausreichend mit den Bändern verbinden zu können, verfügen die Stege über einen Mittelsteg, der üblicherweise für die Befestigungsschrauben mit einer Gewindebohrung versehen ist.

Leichtmetallstege dieser Art werden bei weichem Schnee verwendet. Sie haben den Vorteil des geringen Gewichtes und des hohen Widerstandmomentes. Sie sind indes nicht billig und verschleißen relativ schnell.

Der Erfindung liegt die Aufgabe zugrunde, einen Stahlsteg für Laufketten der eingangs genannten Art zu schaffen, der bei preisgünstiger Fertigung günstige Widerstandswerte zeigt und eine dauerhafte Befestigung mit den Bändern ermöglicht.

Erfindungsgemäß wird diese Aufgabe dadurch gelöst, daß der zweite U-Schenkel über einen nach innen geknickten, zweiten Verbindungsschenkel mit dem Ende des ersten Verbindungsschenkel verschweißt ist und dabei zwischen dem ersten und zweiten U- und Verbindungsschenkel einen hausähnlichen Hohlraum bildet.

Die Erfindung schafft eine Lösung für einander widerstrebende Zielrichtungen. Einerseits sollen die Kosten für die Herstellung eines Stahlsteges gesenkt werden, andererseits soll er verschleißfester werden und für eine bessere Befestigung mit den Bändern sorgen.

Bei der Erfindung dient die Verlängerung des zweiten Schenkels gleichzeitig mehreren Zielen: Das Profil wird geschlossen, so daß man auch die Möglichkeit hat es symmetrisch auszubilden. Gleichzeitig wird ein im Querschnitt etwas hausähnlicher Hohlraum geschaffen der, wie später noch zu erläutern sein wird, zur sicheren Verankerung mit den Bändern dient. Er schafft nämlich den notwendigen Freiraum, um die Befestigungsschrauben darin anordnen und sichern zu können und um gleichzeitig noch Zubehörteile an den Stegen, wie z.B. Führungsplatten und Spikehalter zu verankern. Der hausähnliche Hohlraum vermittelt darüber hinaus hohe Widerstandswerte und gewährleistet eine niedrigere Torsionsspannung als dies bei den bisherigen Stahlstegen der Fall war.

Bildet man den erfindungsgemäßen Stahlsteg symmetrisch aus, so entfällt die Notwendigkeit separate linke und rechte Stahlstege zu fertigen, wie dies beim Stand der Technik notwendig ist.

Bei einer vorteilhaften Weiterbildung der Erfindung ist vorgesehen, daß der Stahlsteg aus einem hochfesten Feinkornstahl besteht. Ein solcher Stahl ist schweißbar und kann auch im Einsatz, also vor Ort geschweißt werden. Er hat hervorragende mechanische Werte auch bei tiefen Temperaturen. Dies ist besonders wichtig bei seinem Einsatz auf Schnee. Es ist kein Vergüten mehr notwendig, weshalb auch das bislang erforderliche Nachrichten entfällt. Der Feinkornstahl kann kalt gewalzt werden. Durch einen entsprechenden Rollvorgang können die Radien an den Verbindungsstellen zwischen dem Verbindungssteg und den U-Schenkeln ganz klein gehalten werden. Hierdurch wird die Auflage des Verbindungssteges auf den Bändern vergrößert. Somit sind keine Unterlagen mehr notwendig, die bislang die Halteböhrungen für die Befestigungsschrauben geschützt haben.

Ein weiterer Vorteil besteht darin, daß der Stahlsteg aus kaltgewalztem Stahlblech hergestellt werden kann und überall die gleiche Materialstärke aufweisen kann.

Bei den vorbekannten Stahlstegen sind bereits im Verbindungssteg des U-Bügels Bohrungen zum Einführen der Befestigungsschrauben für die Bänder vorgesehen. Bei der Erfindung besteht vorteilhafterweise die Möglichkeit, die Bohrungen mit in den Hohlraum ragenden Schürzen zu versehen und darin ein Innengewinde anzuordnen. Diese Schürzen können beispielsweise durch Fließbohren gefertigt werden. Hierbei wird ein Dorn unter schneller Drehung in das Material eingeführt. Er durchdringt das Blech und bildet an der Austrittstelle die besagten Schürzen. Sie können nachträglich mit dem Gewinde versehen werden.

Es besteht aber auch die Möglichkeit, den Stahlsteg warm zu walzen und dabei an der Innenseite im Bereich der vorgesehenen Bohrungen eine verdickte liste anzuformen, in die die Bohrungen für die Befestigungsschrauben eingebracht werden.

Bei einer anderen Variante ist zum gegenseitigen Verbinden der Stahlstege mit den Bändern vorgesehen, in den Hohlraum mindestens einen mit Gewindebohrung versehenen Einsatz, z.B. eine Einlegeleiste anzuordnen. In diesem Fall genügt es, den Verbindungssteg lediglich mit Durchgangsbohrungen zu versehen. Die eigentliche Verankerung der Befestigungsschrauben erfolgt bei der Einlegeleiste.

Bei einer vorteilhaften Weiterbildung der Erfindung ist vorgesehen, daß wenigstens einer der beiden Verbindungsschenkel in seiner Materialstärke gegenüber den U-schenkeln reduziert ist. Eine solche Reduktion kann beispielsweise dadurch erfolgen, daß wenigstens einer der Verbindungsschenkel an seiner, dem hausähnlichen Hohlraum zugeordneten Innenseite eine Vertiefung aufweist. Die Reduktion der Wandstärke bei den Verbindungsschenkeln kann mehreren Zwecken dienen. Der hausähnliche Hohlraum innerhalb des Stahlsteges ist mitbestimmend für dessen Widerstandsmoment. Der U-Bügel mit seinen beiden U-Schenkeln dient als das versteifende Rückgrat des Steges. Reduziert man die Materialstärke in einem oder in beiden Verbindungsschenkeln, so ergibt sich eine vorteilhafte Kombination zwischen dem formsteifen U-Bügel einerseits und der weicheren V-Form der Verbindungsschenkel. Wird das Schwert belastet, so vermag ein in seiner Wandstärke reduzierter Verbindungsschenkel die Belastungskräfte dämpfend aufzunehmen. Dies gilt insbesondere bei Stößen. Je nach dem ob nur einer der Verbindungsschenkel oder beide in ihrer Materialstärke reduziert sind ergibt sich hierdurch eine symmetrische oder asymmetrische Dämpfung. Die Kräfte werden von den Verbindungsschenkeln an die U-Schenkel weitergeleitet, die elastisch nach außen ausweichen können.

Die Materialreduktion eines oder beider Verbindungsschenkel bringt also nicht nur den Vorteil des geringeren Gewichts, sondern den maßgeblichen Vorteil der besseren Dämpfung innerhalb des Stahlsteges. Die Dämpfung bedingt eine unweltschonendere Fahrweise und gleichzeitig einen Zugewinn an Komfort für das Fahrzeug.

Eine Doppelfunktion ergibt sich dadurch, daß der oder die in ihrer Materialstärke reduzierten Verbindungsschenkel einerseits eine Dämpfung bewirken, andererseits aber der U-Bügel ein im wesentlichen formsteifes Rückgrat bildet, der trotz der erzielten Dämpfung den Stahlsteg und damit auch das Schwert in Form hält und für die Aufnahme der Fahrkräfte sorgt.

Einige Ausführungsformen der Verbindung sind nachfolgend anhand einer Zeichnung beschrieben.

Es zeigen:
- Fig.1: Eine Seitenansicht auf einen erfindungsgemäßen Stahlsteg,
- Fig.2: einen Vertikalschnitt durch einen montierten Stahlsteg gemäß Fig. 1, der nach dem Fließbohrverfahren bearbeitet und mit einer Führungsplatte versehen ist,
- Fig.3: eine Teilseitenansicht auf einen Stahlsteg gemäß den Fig. 1 und 2,
- Fig.4: eine Teildraufsicht auf eine Laufkette, die mit erfindungsgemäßen Stahlstegen bestückt ist,
- Fig.5: einen Vertikalschnitt durch eine weitere Ausführungsform der Erfindung, die aus einem warmgewalzten Stahlprofil besteht, das mit einem Spike bestückt ist,
- Fig.6: eine Vorderansicht des Spikes von Fig. 5
- Fig.7: eine Seitenansicht einer weiteren Ausführungsform der Erfindung, bei der der Stahlsteg beidseitig mit Führungsplatten versehen ist und in seinem Hohlraum eine ähnliche Leiste zur Aufnahme der Befestigungsschrauben aufweist, und
- Fig.8: einen Querschnitt durch einen erfindungsgemäßen Stahlsteg, dessen Verbindungsschenkel in ihrer Materialstärke reduziert sind.

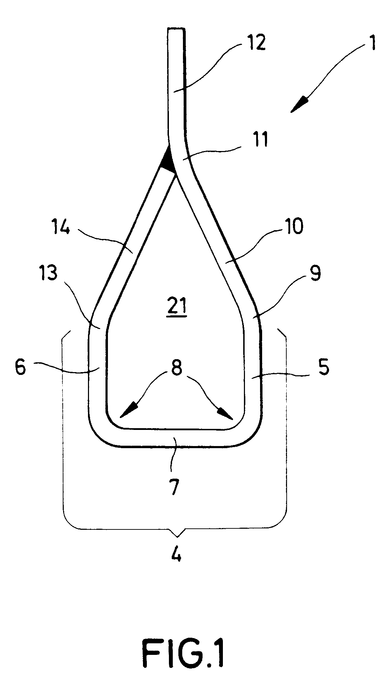

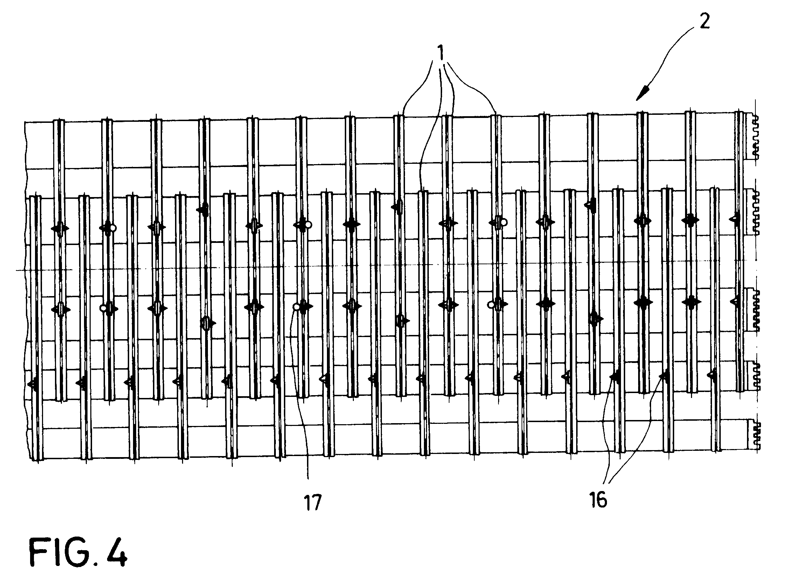

Die Ausführungsform gemäß Fig. 1 zeigt einen Stahlsteg 1, wie er für Laufketten 2 gemäß Fig. 4 vorgesehen ist. Sie werden bei Raupenfahrzeugen verwendet, die im Sommerbetrieb für die Land- und Forstwirtschaft und im Winterbetrieb hauptsächlich zur Pflege von Pisten und Loipen eingesetzt werden.

Die in Fig. 4 abgebildete Laufkette verfügt über insgesamt fünf zueinander parallel liegende und in Fahrtrichtung ausgerichtete Gummibänder 3 an denen quer eine Vielzahl von Stahlstegen 1 befestigt sind. Im Querschnitt verfügt jeder Stahlsteg über einen U-förmigen Bügel 4, der sich aus zwei U-Schenkeln 5 und 6 sowie einem dazwischen befindlichen Verbindungssteg 7 zusammensetzt. Die U-Schenkel sind parallel zueinander ausgerichtet und stehen senkrecht auf dem Verbindungssteg 7. Wichtig ist, daß die Radien 8 in den Ecken zwischen den U-Schenkeln und dem Verbindungssteg relativ klein sind. Dies kann durch einen Rollvorgang erreicht werden. Durch die geringen Radien wird die Auflage des Verbindungssteges 7 auf dem dazugehörigen Gummiband vergrößert. Gegenüber den vorbekannten Lösungen sind deshalb keine Unterlagen mehr notwendig um diese Auflage ausreichend groß zu machen und Beschädigungen an der Verbindungsstelle zwischen dem Stahlsteg und dem Gummiband zu vermeiden.

Der erste U-Schenkel 5 weist als Verlängerung nach oben, also vom Gummiband weggerichtet, einen über einen Knick 9 leicht nach innen geführten Verbindungsschenkel 10 auf. Die Schenkellänge dieses Schenkels ist etwas größer als diejenige der U-Schenkel 5 und 6.

Nach einem weiteren Knick 11 schließt sich daran ein bezüglich des Verbindungssteges 7 rechtwinkelig nach außen ragendes Schwert 12 an, das im vorliegenden Fall etwa die gleiche Länge aufweist wie die U-Bügel 5 und 6. Das freie Ende des Schwertes bildet die eigentliche Aufstandsfläche des Stahlsteges auf dem Untergrund.

Der zweite U-Schenkel 6 ist über einen Knick 13 mit einem zweiten, gleichfalls nach innen geknickten Verbindungsschenkel 14 versehen, dessen freies Ende mit dem ersten Verbindungsschenkel 10 im Bereich des Knickes 11 dauerhaft verbunden ist z.B. durch Schweißen.

Der U-Bügel mit seinen U-Schenkeln 5 und 6 sowie mit seinem Verbindungssteg 7 und die Verbindungsschenkel 10 und 14 bilden zwischen sich einen Hohlraum 21, der die Form eines Hauses mit einem spitzwinkeligen Satteldach hat.

Im vorliegenden Fall ist der Stahlsteg bezüglich der Vertiaklen symmetrisch aufgebaut. Er bildet ein geschlossenes Profil, wodurch günstige Widerstandswerte und eine niedrige Torsionsspannung gewährleistet sind. Da das Profil des Stahlsteges symmetrisch ist, kann der Steg gleichermaßen für die linke, als auch für die rechte Laufkette des Fahrzeuges Verwendung finden.

Der Stahlsteg gemäß Fig. 1 besteht aus einem hochfesten Feinkornstahl, der besonders für Kaltumformungen geeignet und schweißbar ist. Auch die im Bereich des Verbindungssteges gewünschten kleinen Radien lassen sich mit diesem Stahl gut erzielen.

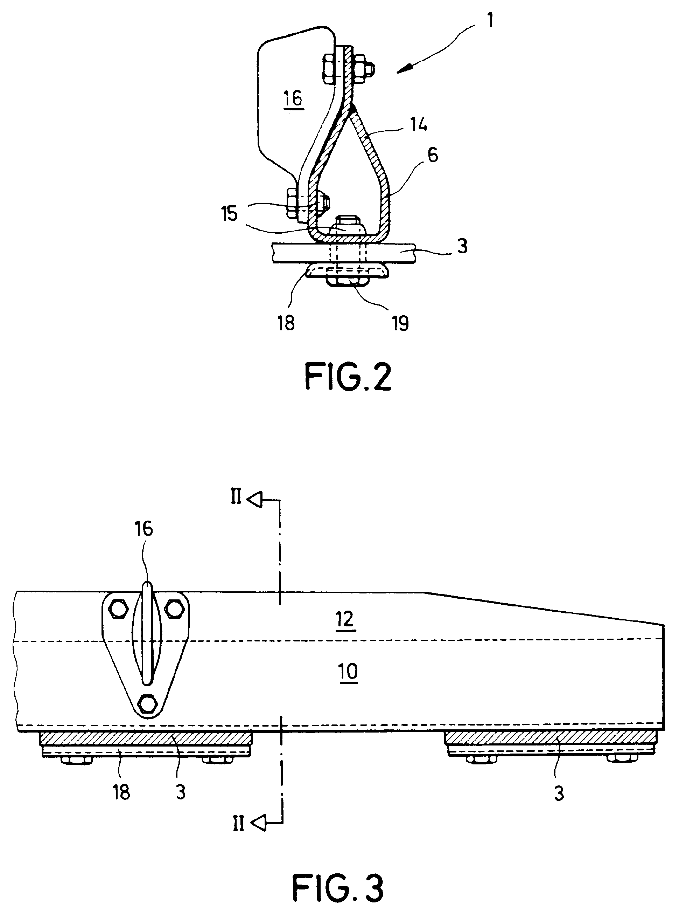

Um den Stahlsteg mit den Gummibändern 3 verbinden zu können, wurde bei der vorliegenden Ausführungsform in der in Fig. 1 angedeuteten Symetrielinie mit Hilfe des Fließbohrverfahrens eine nach innen in den Hohlraum ragende Schürze 15 angeformt. Diese geht aus Fig. 2 hervor. Beim Fließbohren wird mit Hilfe eines schnell rotierenden Dornes das Stahlblech des Stahlsteges an der gewünschten Bohrstelle durchdrungen, worauf sich aufgrund des Materialfließens das verdrängte Material an der Durchtrittsstelle schürzenartig nach innen aufbaut. In die Schürze kann ein Gewinde eingefügt werden z.B. durch Einprägen, wodurch der Werkstoff im Bereich der Schürze weiter verdichtet wird.

Mit Hilfe des Fließbohrens ist man in der Lage an jeder gewünschten Stelle des Stahlsteges eine Befestigung zu erzielen und zwar gleichgültig, ob es sich hierbei um eine Verankerung des Stahlsteges an den Gummibändern handelt, oder um die Verankerung weiterer Zubehörteile, z.B. von Führungsplatten 16, oder Spikes 17. Dies ist insbesondere deshalb vorteilhaft, weil damit ohne besondere zusätzliche Elemente der Hohlraum des Stahlsteges zum Verankern gewisser Teile benutzbar ist.

Fig. 3 zeigt eine Seitenansicht eines Stahlsteges gemäß den Fig. 1 und 2, der bereits auf den Gummibändern 3 fertig montiert ist. In Verbindung mit der Fig. 2 ist ersichtlich, daß die in der Draufsicht dreiecksförmigen Führungsplatten 16 je zwei Befestigungsschrauben im Bereich des Schwertes 12 aufweisen und eine an ihrem Fußbereich. Letztere ist über eine Befestigungsschraube verankert, die wiederum in eine nach dem Fließbohrverfahren im Hohlinnenraum gebildete Schürze eingeschraubt ist.

Aus den Fig. 2 und 3 ist ersichtlich, daß die Befestigungsschrauben mit ihren Köpfen auf Unterlagen 18 aufliegen, die als Zwischenschicht zu den Bändern 3 hin dienen.

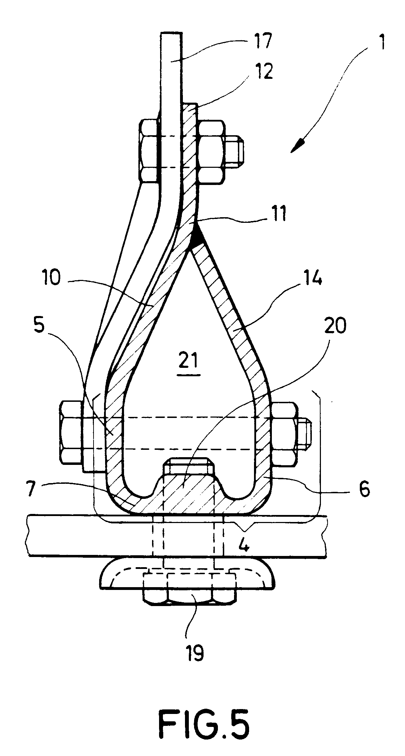

Während der Stahlsteg gemäß den Fig. 1 bis 3 aus kaltgewalztem Stahlblech besteht, das überall in etwa die gleiche Materialstärke aufweist, ist der Stahlsteg gemäß Fig. 5 durch Warmwalzen hergestellt. Er verfügt grundsätzlich über den gleich Aufbau, wie der Stahlsteg gemäß Fig. 1. Gleiche Teile sind deshalb mit den gleichen Bezugszeichen versehen. Um die Befestigungsschrauben 19 mit dieser Ausführungsform des Stahlsteges zu verbinden, ist beim Warmwalzvorgang an der Innenseite des Verbindungssteges 7 eine diesen verdickende liste 20 angeformt worden, in die nach Wunsch für die Befestigungsschrauben 19 eine Gewindebohrung eingebracht wird. Die liste verläuft über die gesamte Länge des Steges.

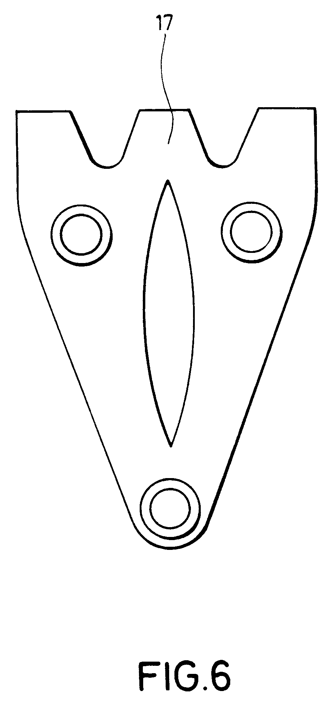

Die Fig. 5 zeigt darüberhinaus die Anbringung eines Spikes 17. Die Fig. 6 zeigt dessen Seitenansicht. Er ist analog zur Führungsplatte in etwa dreiecksförmig gestaltet. An seinem oberen, breiteren Ende, verfügt er über zwei Befestigungsschrauben, an seinem unteren über eine. Im gezeigten Fall ist diese eine untere Befestigungsschraube durch den Hohlraum 21 hindurchgeführt und erst im Bereich des zweiten U-Schenkels 6 durch eine Gegenmutter verankert.

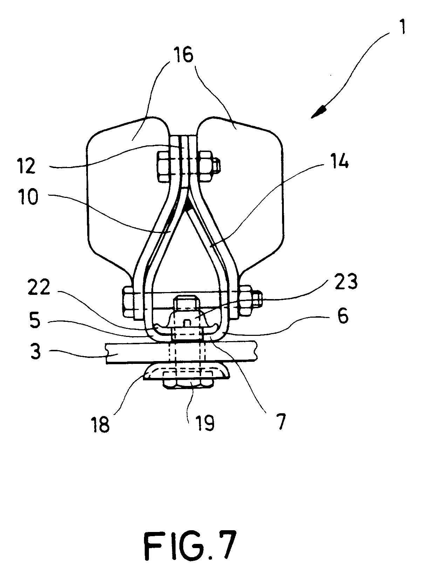

Die Fig. 7 zeigt eine weitere Ausführungsform der Erfindung. Grundsätzlich gilt wieder, daß dieser Stahlsteg den gleichen Aufbau wie die Ausführungsform gemäß den Fig. 1 bis 3 hat. Gleiche Teile sind mit gleichen Bezugszeichen versehen.

Bei dieser Ausführungsform werden die Stahlstege an den Bändern 3 mit Hilfe von Einsätzen verankert, die jeweils die Form einer Einlegeleiste 22 aufweisen. Im Querschnitt folgt sie der inneren Form des Verbindungssteges 7 und ist zur Schaffung einer ausreichenden Materialstärke für Gewindebohrungen mit einer nach innen in den Hohlraum 21 ragenden Verdickung 23 versehen. Die Einlegeleiste 22 bietet den Vorteil, daß der Stahlsteg lediglich an den erforderlichen Stellen mit Durchgangsbohrungen versehen werden muß, die eigentliche Verankerung der Bestigungsschrauben 19 findet jedoch zwischen den Unterlagen 18 und den in der Einlegeleiste 22 vorhandenen Gewindebohrungen statt.

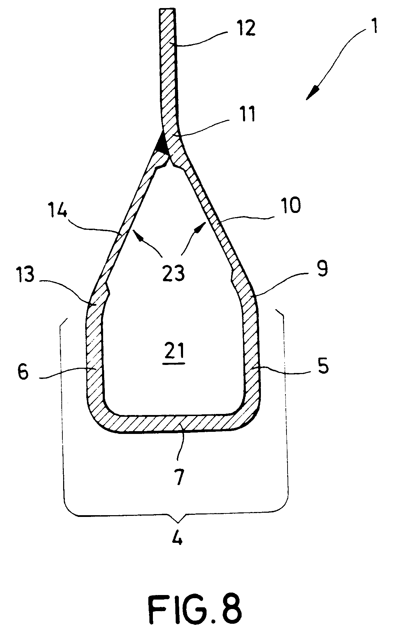

Die Fig. 8 zeigt eine weitere Ausführungsform des erfindungsgemäßen Stahlsteges. Der einfachheithalber sind gleiche Teile mit den gleichen Bezugszeichen wie bei den vorhergehenden Ausführungsformen bezeichnet. Nachfolgend wird nur noch auf die Unterschiede eingegangen.

Bei dem Stahlsteg von Fig. 8 sind beide Verbindungsschenkel 10 und 14 in ihrer Materialstärke reduziert. Sie weisen jeweils im Querschnitt U-förmige, schalenartige Vertiefungen 23 auf, die sich im vorliegenden Fall fast über die gesamte Länge beider Verbindungsschenkel erstrecken. Die Vertiefungen sind bezüglich der Ebene des Schwertes 12 symmetrisch angeordnet, so daß das Profil des Stahlsteges in sich spiegelsymmetrisch ist.

Die Reduktion der Materialstärke ist so gewählt, daß die Verbindungsschenkel 10, 14 weicher sind als die U-Schenkel 5 und 6 des U-Bügels 4. Hierdurch ergibt sich eine sehr vorteilhafte Kombination zwischen der Formsteife des U-Bügels 4 und dem Stoßdämpfvermögen der V-förmig aufeinanderzulaufenden Verbindungsschenkel 10 und 14.

Will man eine asymmetrische Dämpfwirkung erzielen, so gibt es die Möglichkeit lediglich eine der beiden Verbindungsschenkel in seiner Materialstärke zu schwächen oder bei beiden Verbindungsschenkeln eine unterschiedliche Materialstärke vorzusehen.

Die Erfindung ist nicht auf die gezeigten Ausführungsbeispiele beschränkt. Insbesondere besteht auch die Möglichkeit die U-Schenkel in ihrer Wandstärke zu variieren um beispielsweise auch in diesem Bereich eine Dämpfung zu erzielen. Es ist infolgedessen bei dem erfindungsgemäßen Stahlsteg eine Kombination dergestalt denkbar, daß einer oder beide Verbindungsschenkel die unreduzierte Wandstärke aufweisen, wohingegen einer oder beide U-Schenkel mit dem Ziele der Dämpfung in ihrer Wandstärke reduziert sind.

Sind lediglich die Verbindungsschenkel reduziert, so bildet der U-Bügel das formsteife Rückgrat, werden dagegen die U-Schenkel reduziert, so vermag die V-Form der Verbindungsschenkel einen formsteifen Rückhalt zu bieten. Kombinationen aus den ebengenannten Varianten ist möglich, wenn man Formsteife einerseits und Dämpfungsfalten andererseits innerhalb des hausähnlichen Hohlraumes 21 variieren will.

## Patentansprüche

1. Laufkette für Raupenfahrzeuge, insbesondere solche für die Pflege von Skipisten, mit mehreren parallel zueinanderliegenden und in Fahrtrichtung ausgerichteten Bänder (3) aufweisen, an denen quer eine Vielzahl von Stahlstegen (1) befestigt sind, die im Querschnitt einen U-Bügel (4) mit zwei U-Schenkeln (5,6) und dazwischen einen Verbindungssteg (7) aufweisen, von denen der erste U-Schenkel (5) als Verlängerung einen über einen Knick nach innen geführten Verbindungsschenkel (10), sowie nach einem weiteren Knick ein sich daran anschließendes, in etwa zu den U-Schenkeln paralleles Schwert (12) besitzt,
**dadurch gekennzeichnet,**
daß der zweite U-Schenkel (6) über einen nach innen geknickten, zweiten Verbindungsschenkel (14) mit dem Ende des ersten Verbindungsschenkels (10) verschweißt ist und dabei zwischen dem ersten und dem zweiten U- und Verbindungsschenkeln (5,6,10,14) einen im Querschnitt hausähnlichen Hohlraum (21) bildet.

2. Laufkette nach Anspruch 1,
**dadurch gekennzeichnet,**
daß der Stahlsteg aus einem hochfesten Feinkornstahl besteht.

3. Laufkette nach Anspruch 1 oder 2,
**dadurch gekennzeichnet,**
daß der Stahlsteg aus kaltgewalztem Stahlblech besteht und überall die gleiche Materialstärke aufweist.

4. Laufkette nach einem der Ansprüche 1 bis 3,
**dadurch gekennzeichnet,**
daß das Schwert (12) des Stahlsteges (1) symmetrisch zum U-Bügel (4) angeordnet ist und im rechten Winkel zum Verbindungssteg (7) steht.

5. Laufkette nach einem der Ansprüche 1 bis 4,
**dadurch gekennzeichnet,**
daß die Verbindungsschenkel (10,11) symmetrisch zum U-Bügel (4) angeordnet sind.

6. Laufkette nach einem der Ansprüche 1 bis 5, mit Bohrungen im Verbindungssteg zum Befestigen der Stahlstege mittels Schrauben an die Bänder,
**dadurch gekennzeichnet,**
daß die Bohrungen mit in den Hohlraum (21) ragenden Schürzen (15) versehen sind und ein Innengewinde aufweisen.

7. Laufkette nach einem der Ansprüche 1 bis 6,
**dadurch gekennzeichnet,**
daß die Radien (8) in den Ecken zwischen den U-Schenkeln (5,6) des Stahlstegs und dem Verbindungssteg (7) möglichst klein sind.

8. Laufkette nach einem der Ansprüche 1 bis 7,
**dadurch gekennzeichnet,**
daß in den Hohlraum (21) zum gegenseitigen Verbinden der Stahlstege (1) mit den Bändern (3) mindestens ein mit Gewindebohrungen versehener Einsatz, z.B. eine Einlegeleiste (22) angeordnet ist.

9. Laufkette nach einem der Ansprüche 1 bis 8,
**dadurch gekennzeichnet,**
wenigstens einer der beiden Verbindungsschenkel (10,14) in seiner Materialstärke gegenüber den U-Schenkeln reduziert ist.

10. Laufkette nach Anspruch 9,
**dadurch gekennzeichnet,**
wenigstens einer der Verbindungsschenkel (10,14) an seiner, dem hausähnlichen Hohlraum (21) zugeordneten Innenseite eine Vertiefung (23) aufweist.

11. Laufkette nach Anspruch 10,
**dadurch gekennzeichnet,**
die Vertiefung (23) sich im wesentlichen über die gesamte Länge des Verbindungsschenkels (10,14) erstreckt.

12. Laufkette nach einem der Ansprüche 10 oder 11,
**dadurch gekennzeichnet,**
die Vertiefung (23) schalenartig geformt ist und an ihren Rändern einen sanften abgerundeten Übergang zu dem nicht reduzierten Abschnitt des Verbindungsschenkels aufweist.

## Claims

1. Crawler chain for tracked vehicles, in particular for ski piste maintenance vehicles, with a number of parallel belts (3) aligned in the direction of travel, to which a plurality of steel grousers (1), comprising in cross-section a channel (4) with two legs (5, 6) joined by a connecting web (7), are transversely attached, the first of the said channel legs (5) possessing as an extension an inwardly cranked linking leg (10) leading via a further crank to a blade (12) more or less parallel with the channel legs, characterized in that the second channel leg (6) is welded to the end of the first linking leg (10) by an inwardly cranked second linking leg (14) to form a cavity (21) resembling the shape of a house in cross-section between the first and second channel legs and linking legs (5, 6, 10, 14).

2. Crawler chain according to Claim 1, characterized in that the grouser is made of high-strength grain refined steel.

3. Crawler chain according to Claim 1 or 2, characterized in that the grouser is made of cold-rolled steel plate material of uniform thickness.

4. Crawler chain according to one of Claims 1 to 3, characterised in that the blade (12) of the grouser (1) is symmetrical with respect to the channel (4) and is at right angles to the connecting web (7).

5. Crawler chain according to one of Claims 1 to 4, characterized in that the linking legs (10, 14) are symmetrical with respect to the channel (4).

6. Crawler chain according to one of Claims 1 to 5, with holes in the connecting web for fastening the grousers to the belts by means of screws, characterized in that the holes are provided with skirts (15) projecting into the cavity (21) and have an internal screw thread.

7. Crawler chain according to one of Claims 1 to 6, characterized in that the radii (8) in the corners between the channel legs (5, 6) of the grouser and the connecting web (7) are as small as possible.

8. Crawler chain according to one of Claims 1 to 7, characterized in that at least one inserted piece provided with tapped holes, e.g. an inserted strip (22), is arranged in the cavity (21) for connecting the grousers (1) to the belts (3).

9. Crawler chain according to one of Claims 1 to8, characterized in that at least one of the two linking legs (10, 14) is made of thinner material than the channel legs.

10. Crawler chain according to Claim 9, characterized in that at least one of the linking legs (10. 14) has a hollow (23) on its inside face facing the house-shaped cavity (21).

11. Crawler chain according to Claim 10, characterized in that the hollow (23) extends essentially over the entire length of the linking leg (10, 14).

12. Crawler chain according to one of Claims 10 or 11, characterized in that the hollow (23) is dish-shaped and at its edges has a gently rounded transition to the non-thinned portion of the linking leg.

## Revendications

1. Chenille pour véhicules chenillés en particulier pour l'entretien des pistes de ski, comportant plusieurs bandes (3) parallèles et orientées dans la direction de marche auxquelles sont fixées transversalement un grand nombre de barrettes en acier (1) qui présentent en coupe transversale un étrier en U (4) ayant deux ailes (5, 6) et une âme (7) située entre celles-ci, la première aile (5) ayant comme prolongement une aile de liaison (10) inclinée vers l'intérieur par l'intermédiaire d'un coude et, après un autre coude, une épée (12) faisant suite à cette aile de liaison (10) et à peu près parallèle aux ailes de l'étrier, caractérisée par le fait que la deuxième aile (6) de l'étrier est, par l'intermédiaire d'une deuxième aile de liaison (14) inclinée vers l'intérieur, soudée à l'extrémité de la première aile de liaison (10), et entre la première et la deuxième ailes de l'étrier et la première et la deuxième ailes de liaison (5, 6, 10, 14) est ainsi formée une cavité (21) semblable en coupe transversale à une maison.

2. Chenille selon la revendication 1, caractérisée par le fait que la barrette est en acier à grain fin à haute résistance.

3. Chenille selon l'une des revendications 1 et 2, caractérisée par le fait que la barrette est en tôle d'acier laminée à froid et a partout la même épaisseur.

4. Chenille selon l'une des revendications 1 à 3, caractérisée par le fait que l'épée (12) de la barrette en acier (1) est placée symétriquement par rapport à l'étrier en U (4) et est perpendiculaire à l'âme (7) de celui-ci.

5. Chenille selon l'une des revendications 1 à 4, caractérisée par le fait que les ailes de liaison (10, 14) sont placées symétriquement par rapport à l'étrier en U (4).

6. Chenille selon l'une des revendications 1 à 5, présentant des trous dans l'âme de l'étrier pour la fixation des barrettes en acier aux bandes au moyen de vis, caractérisée par le fait que les trous sont pourvus de tabliers (15) saillant dans la cavité (21) et présentent un filetage intérieur.

7. Chenille selon l'une des revendications 1 à 6, caractérisée par le fait que les rayons (8) dans les coins entre les ailes (5, 6) et l'âme (7) de l'étrier de la barrette en acier sont aussi petits que possible.

8. Chenille selon l'une des revendications 1 à 7, caractérisée par le fait que pour l'union des barrettes en acier (1) aux bandes (3), dans la cavité (21) est placé au moins un élément rapporté pourvu de trous taraudés, par exemple une languette encastrée (22).

9. Chenille selon l'une des revendications 1 à 8, caractérisée par le fait qu'au moins une des deux ailes de liaison (10, 14) a une épaisseur réduite par rapport aux ailes de l'étrier.

10. Chenille selon la revendication 9, caractérisée par le fait qu'au moins une des ailes de liaison (10, 14) présente un creux (23) sur sa face intérieure limitant la cavité semblable à une maison (21).

11. Chenille selon la revendication 10, caractérisée par le fait que le creux (23) s'étend sensiblement sur toute la longueur de l'aile de liaison (10, 14).

12. Chenille selon l'une des revendications 10 et 11, caractérisée par le fait que le creux (23) est du genre cuvette et présente sur ses bords un raccordement arrondi doux à la partie non réduite de l'aile de liaison.
